# EUROPÄISCHE PATENTSCHRIFT

(11) **EP 1 223 330 B1**
(45) Veröffentlichungstag und Bekanntmachung des Hinweises auf die Patenterteilung: **18.04.2007**
(21) Anmeldenummer: 02000516.1
(22) Anmeldetag: 09.01.2002
(51) Int. Cl.: F02D 45/00, F01L 1/344, F02D 13/02

(54) **Verfahren und Vorrichtung zum Regeln einer Regelstrecke sowie Brennkraftmaschine mit einem solchen Regler**
Method and device for controlling a controlled system and internal combustion engine with such a controlled system
Méthode et dispositif pour réguler un système asservi, ainsi qu'un moteur à combustion interne utilisant ce système

(30) Priorität: 16.01.2001 DE 10101678
(43) Veröffentlichungstag der Anmeldung: 17.07.2002
(73) Patentinhaber: Volkswagen Aktiengesellschaft, 38436 Wolfsburg (DE)
(72) Erfinder: Gao, Hua, Dr. Ing., 38444 Wolfsburg (DE); Schnaubelt, Michael, 37242 Allendorf (DE)

(56) Entgegenhaltungen:
- DE-A1- 19 505 915
- DE-A1- 19 617 867
- DE-A1- 19 712 861
- DE-A1- 19 819 360
- US-A- 4 462 373

## Beschreibung

Die Erfindung betrifft ein Verfahren zum Regeln einer Regelstrecke, wobei aus einem Sollwert und einem Istwert eine Regelabweichung und aus der Regelabweichung ein P-Anteil sowie mittels eines Integrators ein I-Anteil bestimmt wird und aus dem P-Anteil sowie dem I-Anteil eine Stellgröße für die Regelstrecke bestimmt wird, gemäß dem Oberbegriff des Anspruchs 1. Die Erfindung betrifft ferner einen Regler zum Regeln einer Regelstrecke, welcher aus einem Sollwert und einem Istwert eine Regelabweichung bestimmt und einen Integrator aufweist, welcher aus der Regelabweichung einen I-Anteil bestimmt, aus dem der Regler zumindest zusammen mit einem P-Anteil eine Stellgröße für die Regelstrecke bestimmt, gemäß dem Oberbegriff des Anspruchs 5. Die Erfindung betrifft weiterhin eine Brennkraftmaschine mit wenigstens einer von einer Kurbelwelle angetriebenen Nockenwelle, einem Nockenwellenversteller, welcher die Nockenwelle bzgl. der Kurbelwelle um einen vorbestimmten Winkel verschwenkt, und einem Regler, dessen Ausgang eine Stellgröße in Form eines Tastverhältnisses zum Bestromen eines Proportionalventiles ist, welches den Nockenwellenversteller ansteuert und verstellt, gemäß dem Oberbegriff des Anspruchs 9.

Zur Regelung einer Regelstrecke mit einem Regler, beispielsweise einem aus der DE 196 17 867 A1 oder der DE 195 05 915 A1 bekannten PI-Regler oder PID-Regler, wird eine Stellgröße aus einem Sollwert und einem Istwert über einen Proportionalanteil (P-Anteil) und einem Integralanteil (I-Anteil) bestimmt. Bei PI-Reglern ist es bekannt, mittels eines Integralanteils ein Stellsignal so zu bestimmen, daß es zu keiner bleibenden Regelabweichung kommt. Sofern jedoch eine Regelstrecke unter bestimmten Bedingungen nicht regelbar ist, beispielsweise weil der benötigte Öldruck vorübergehend nicht zur Verfügung steht, kann der Istwert nicht auf dem Sollwert gehalten werden. In diesem Fall wird der I-Anteil größer. Sind dann die Bedingungen für eine korrekte Verstellung wieder gegeben, führt der so falsch bestimmte Integralanteil zu einem Überschwingen des Istwertes gegenüber dem Sollwert.

Der vorliegenden Erfindung liegt die Aufgabe zugrunde, ein Verfahren, einen Regler und eine Brennkraftmaschine der obengenannten Art dahingehend zu verbessern, daß auch Regelstrecken ohne Überschwingen regelbar sind, bei denen Betriebssituationen auftreten, in denen es trotz korrektem Stellwert nicht möglich ist, den Istwert auf dem Sollwert zu halten.

Diese Aufgabe wird erfindungsgemäß durch ein Verfahren der o.g. Art mit den in Anspruch 1 gekennzeichneten Merkmalen, durch einen Regler der o.g. Art mit den in Anspruch 5 gekennzeichneten Merkmalen und durch eine Brennkraftmaschine der o.g. Art mit den in Anspruch 9 gekennzeichneten Merkmalen gelöst. Vorteilhafte Ausgestaltungen der Erfindung sind in den abhängigen Ansprüchen angegeben.

Bei einem Verfahren der o.g. Art ist es erfindungsgemäß vorgesehen, daß der I-Anteil als Ausgangswert des Integrators auf einen Maximalwert und einen Minimalwert begrenzt wird, daß der I-Anteil mittels eines Filters, insbesondere PT1-Filters, mit vorbestimmter Zeitkonstante über die Zeit gemittelt wird und der Maximalwert für den Integrator aus diesem Mittelwert zuzüglich einem vorbestimmten ersten Wert und der Minimalwert aus diesem Mittelwert abzüglich einem vorbestimmten zweiten Wert bestimmt wird und daß in einem Zustand, in dem die Regelstrecke nicht regelbar ist, die Zeitkonstante des Filters auf einen höheren Wert gesetzt wird.

Dies hat den Vorteil, daß mittels der kleineren Zeitkonstante des Filters der Betriebspunkt im regelbaren Zustand angepaßt wird, wobei dann, wenn die Regelstrecke vorübergehend nicht regelbar ist, durch die höhere Zeitkonstante am Filter der I-Anteil im wesentlichen festgehalten wird, bis sich wieder ein regelbarer Zustand an der Regelstrecke einstellt.

Beispielsweise umfaßt die Regelstrecke einen Nockenwellenversteller einer Brennkraftmaschine und ist die Stellgröße ein Tastverhältnis zum Bestromen eines Proportionalventiles, welches den Nockenwellenversteller ansteuert.

Zur weiteren Begrenzung des I-Anteils wird dieser bevorzugt nur dann bestimmt wird, wenn die Regelabweichung unterhalb eines vorbestimmten Wertes liegt.

Bei einem Regler der o.g. Art ist es erfindungsgemäß vorgesehen, daß dem Integrator ein Begrenzer zugeordnet ist, welcher den Ausgangswert des Integrators auf einen Maximalwert und einen Minimalwert begrenzt, daß dem Integrator ein Filter, beispielsweise ein PT1-Filter, nachgeschaltet ist, welches mit einer vorbestimmten Zeitkonstante den Ausgang des Integrators mittelt, wobei der Ausgang des Filters mit dem Begrenzer verbunden ist, welcher den Maximalwert für den Integrator aus dem Ausgang des Filters zuzüglich eines vorbestimmten ersten Wertes und den Minimalwert aus dem Ausgangswert des Filters abzüglich eines vorbestimmten zweiten Wertes bestimmt, wobei ferner dem Filter eine Umschalteinrichtung zugeordnet ist, welche in einem Zustand, in dem die Regelstrecke nicht regelbar ist, die Zeitkonstante des Filters erhöht.

Dies hat den Vorteil, daß mittels einer Rückkopplung des I-Anteils auf den Maximalwert und den Minimalwert des Integrators der I-Anteil angepaßt an unterschiedliche Betriebspunkte begrenzt wird bzw. mittels der kleineren Zeitkonstante des Filters der Betriebspunkt im regelbaren Zustand angepaßt wird, wobei dann, wenn die Regelstrecke vorübergehend nicht regelbar ist, durch die höhere Zeitkonstante am Filter der I-Anteil im wesentlichen festgehalten wird, bis sich wieder ein regelbarer Zustand an der Regelstrecke einstellt.

Beispielsweise umfaßt die Regelstrecke einen Nockenwellenversteller einer Brennkraftmaschine und die Stellgröße ist ein Tastverhältnis zum Bestromen eines Proportionalventiles, welches den Nockenwellenversteller ansteuert.

Zur weiteren Begrenzung des I-Anteils ist dem Integrator und dem Filter eine Sperreinrichtung zugeordnet, welche den Integrator und die Filterung durch den Filter sperrt, wenn die Regelabweichung oberhalb eines vorbestimmten Wertes liegt.

Eine Brennkraftmaschine der o.g. Art umfaßt erfindungsgemäß einen Regler der vorgenannten Art mit den sich bzgl. des Reglers entsprechend ergebenden Vorteilen.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in
- Fig. 1: eine bevorzugte Ausführungsform einer erfindungsgemäßen Brennkraftmaschine in schematischer Frontansicht,
- Fig. 2: ein Beispiel einer Regelstrecke mit einem erfindungsgemäßen Regler für einen Nockenwellenversteller der Brennkraftmaschine von Fig. 1 in schematischer Seitenansicht,
- Fig.3: ein Blockschaltbild einer bevorzugten Ausführungsform eines Teils eines erfindungsgemäßen Reglers und
- Fig. 4: ein detaillierteres Blockschaltbild des Reglers von Fig. 3.

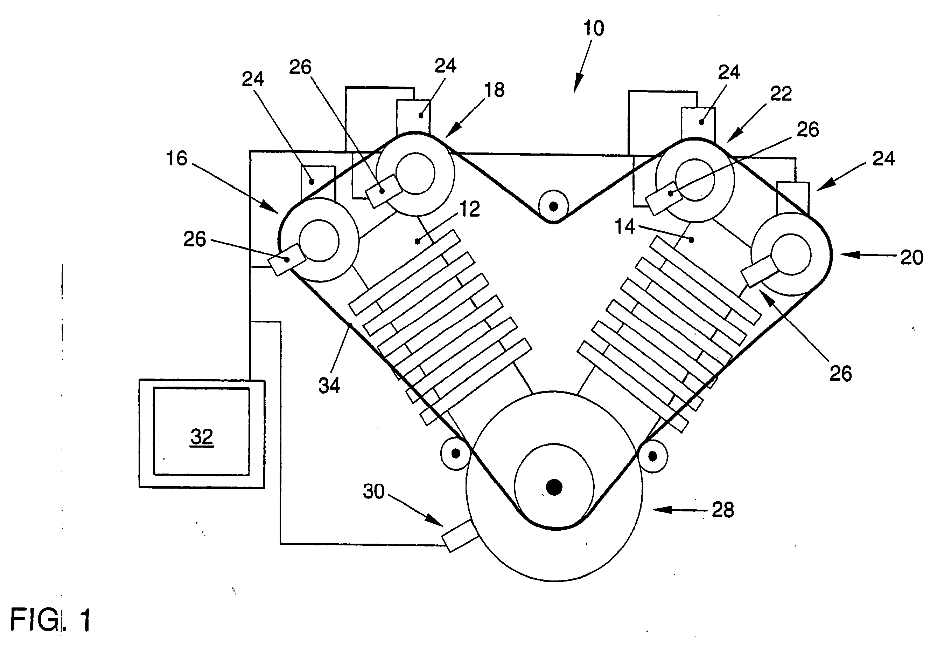

Die in Fig. 1 schematisch veranschaulichte Brennkraftmaschine 10 umfaßt zwei Zylinderbänke 12 und 14, eine Auslaßnockenwelle 16 sowie eine Einlaßnockenwelle 18 der ersten Zylinderbank 12, eine Auslaßnockenwelle 20 sowie eine Einlaßnockenwelle 22 der zweiten Zylinderbank 14, jeweilige Nockenwellensteller 24, Nockenwellensensoren 26, eine Kurbelwelle 28 und einen Kurbelwellensensor 30. Ein Steuergerät 32 empfängt Signale der Sensoren 26, 30 und bestromt die Nockenwellensteller 24 entsprechend, so daß sich ein gewünschter Winkelistwert für eine relative Winkelstellung zwischen den Nockenwellen 16, 18, 20, 22 und der Kurbelwelle 28 einstellt. Die Nockenwellen 16, 18, 20, 22 werden über einen Trieb 34 von der Kurbelwelle 28 angetrieben.

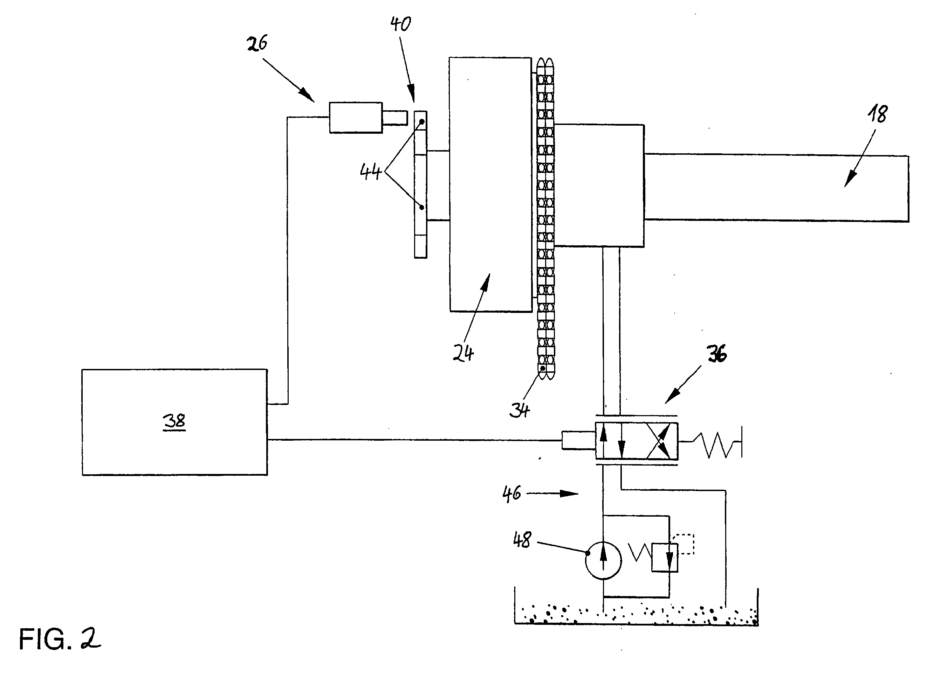

Die in Fig. 2 näher dargestellte Nockenwellenanordnung für die verstellbare Nockenwelle 18 als Beispiel für eine Regelstrecke umfaßt den Schwenkversteller 24, ein diesen Schwenkversteller 24 ansteuerndes 4/2-Proportionalwegeventil 36, ein Motorsteuergerät 38, ein der Nockenwelle 18 zugeordnetes Schnellstartgeberrad 40, den dieses Schnellstartgeberrad 40 abtastenden Nockenwellensensor 26 und eine die Nockenwelle 18 mit der Kurbelwelle 28 verbindende Kette 34. Der Nockenwellensensor 26 tastet das Schnellstartgeberrad 40 ab, wobei letzteres Erhebungen 44 aufweist, die sich bei Drehung der Nockenwelle 18 aufeinander folgend an dem Nockenwellensensor 26 vorbei bewegen und dort entsprechende Flankensignale erzeugen, die von dem Nockenwellensensor 26 an das Motorsteuergerät 38 übertragen werden. Das Motorsteuergerät 38 bestromt wiederum das Proportionalwegeventil 36 derart, daß den Schwenkversteller 24 mit entsprechendem Öldruck aus einem Ölkreislauf 46 versorgt wird. Dieser Öldruck wird von einer Motorölpumpe 48 erzeugt. Der Öldruck ist dabei von einer Drehzahl der Brennkraftmaschine abhängig.

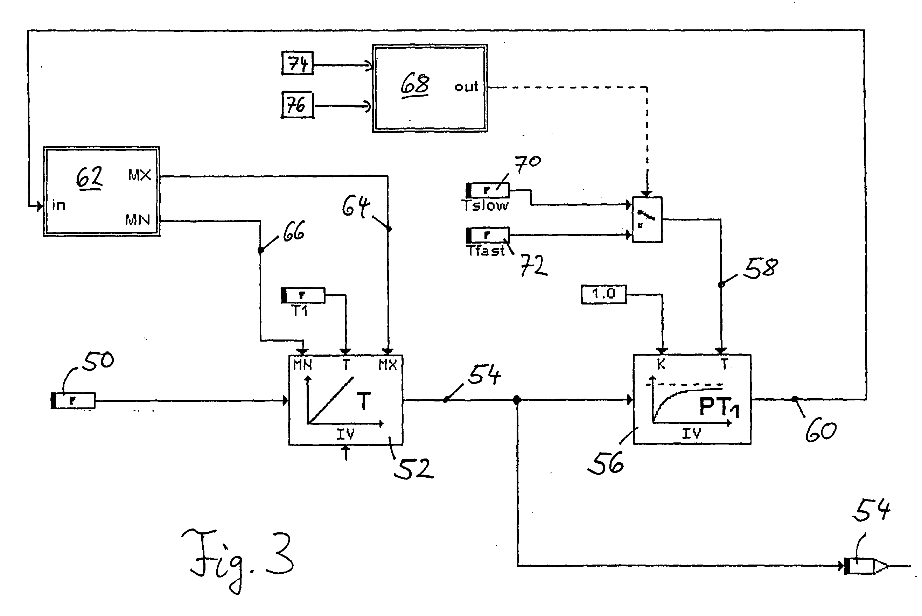

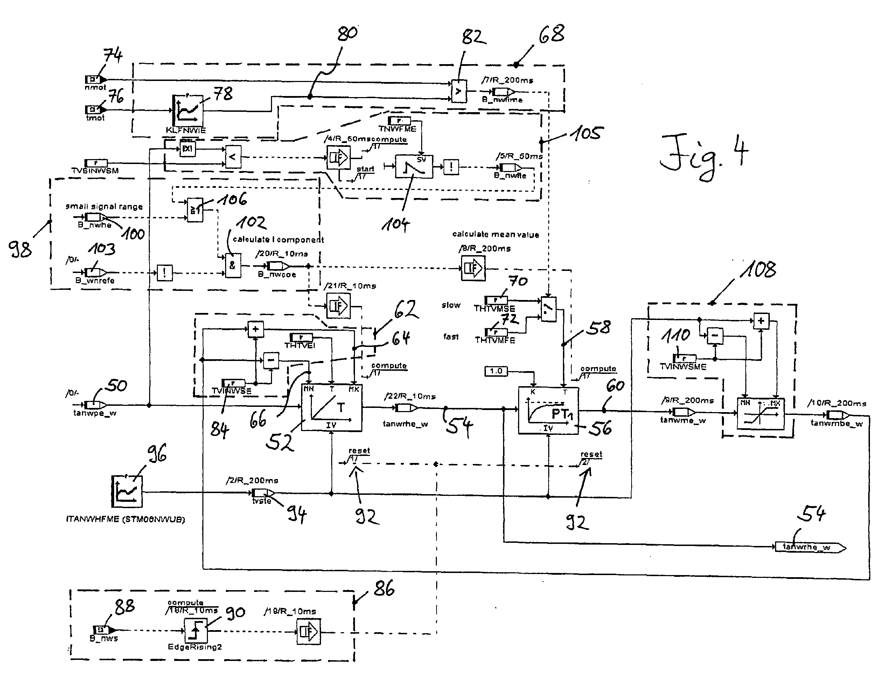

Fig. 3 veranschaulicht schematisch einen erfindungsgemäßen Regler, mit dem das erfindungsgemäße Verfahren ausgeführt wird. Eine Regelabweichung 50 aus einem Sollwert und einem Istwert für den Versteller, beispielsweise in Grad Kurbelwelle, wird einem Integrator 52 zugeführt. Der Ausgang 54 des Integrators 52 ist Teil der Stellgröße in Form eines Tastverhältnisses, dem noch ein aus dem Ist- und Sollwert bestimmter P-Anteil und ggf. ein ebenfalls aus Ist- und Sollwert bestimmter D-Anteil (Differentialanteil) hinzu addiert wird. Es handelt sich also um einen Pl-Regler bzw. einen PID-Regler. In den Fig. 3 und 4 ist lediglich derjenige Teil des Reglers dargestellt, welcher den I-Anteil bestimmt.

Erfindungsgemäß wird der Ausgang 54 des Integrators 52 einem Filter 56 zugeführt, welcher den t-Anteil 54 aus dem Integrator 52 mit einer vorbestimmten Zeitkonstante 58 über die Zeit mittelt. Der Ausgang 60 des Filters 56 wird einem Begrenzer 62 zugeführt. Dieser berechnet aus dem gemittelten I-Anteil 60 einen Maximalwert 64 und einen Minimalwert 66, indem er dem gemittelten I-Anteil 60 einen vorbestimmten Wert, beispielsweise 1% Tastverhältnis, hinzu addiert bzw. vom gemittelten I-Anteil 60 subtrahiert. Der Maximalwert 64 und Minimalwert 66 wird dem Integrator 52 zugeführt, so daß dessen Ausgang 54 auf Werte dazwischen eingeschränkt ist.

Dem Filter 56 ist ferner eine Umschalteinrichtung 68 zugeordnet, welche in einem Zustand, in dem die Regelstrecke, d.h. also der Versteller 24 (Fig. 2), nicht regelbar ist, die Zeitkonstante 58 des Filters 56 auf einen zweiten vorbestimmten Wert 70 erhöht. Sobald wieder ein regelbarer Zustand von der Umschalteinrichtung 68 detektiert wird, schaltet diese zurück auf einen ersten vorbestimmten Wert 72 mit einer kleineren Zeitkonstante. Die kleinere Zeitkonstante 72 erlaubt ein schnelles Anpassen des I-Anteils an die momentane Betriebssituation, so daß ein Betriebspunkt für den I-Anteil schnell gelernt wird. Die erhöhte Zeitkonstante 70 dient dazu, in Betriebsphasen mit niedrigem Öldruck, d.h. niedriger Motordrehzahl, in denen der Versteller 24 von dem Proportionalwegeventil 36 mangels ausreichendem Druck nicht auf dem Sollwert gehalten werden kann, den I-Anteil 54 zu halten, so daß der zuvor gelernte Betriebspunkt für den I-Anteil nicht vergessen wird.

Fig. 4 veranschaulicht detaillierter einen beispielhafter Aufbau des Reglers. Die Umschalteinrichtung 68 erhält als Eingänge eine Motordrehzahl 74 und eine Motortemperatur 76. Aus der Motortemperatur 76 wird über ein Kennfeld 78 eine bestimmte Motordrehzahl 80 (Motordrehzahlschwelle) ermittelt unter der mangels ausreichendem Öldruck keine einwandfreie Regelung der Stellung des Verstellers 24 möglich ist. In einem Vergleicher 82 wird die Eingangsgröße Motordrehzahl 74 mit der Motordrehzahlschwelle 80 aus dem Kennfeld verglichen. Ist die Eingangsgröße Motordrehzahl 74 kleiner als die aus dem Kennfeld 78 ermittelte Motordrehzahlschwelle 80, so geht der Umschalter 68 von einem Zustand aus, in dem die Regelstrecke nicht regelbar ist und schaltet auf die hohe Zeitkonstante 70 um. Hierdurch wird der I-Anteil im Filter 56 im wesentlichen festgehalten. Sobald nun die Eingangsgröße Motordrehzahl 74 wieder größer als die aus dem Kennfeld 78 ermittelte Motordrehzahlschwelle 80 ist, geht der Umschalter 68 von einem regelbaren Zustand aus und schaltet wieder auf die kleine Zeitkonstante 72 um.

Aus Fig. 4 ist ferner ein beispielhafter Aufbau des Begrenzers 62 ersichtlich. Dieser weist eine Speicherstelle 84 mit einem vorbestimmten Tastverhältnis auf. Dieses vorbestimmte : Tastverhältnis 84, beispielsweise 1%, wird zum Berechnen des Maximalwertes 64 dem Ausgang 60 des Filters 56 hinzu addiert und zum Berechnen des Minimalwertes 66 vom Ausgang 60 des Filters 56 abgezogen und das jeweilige Ergebnis dem Integrator 52 zugeführt.

Bei 86 wird eine Initialisierung beim Start der Regelung durchgeführt. Sobald von 88 ein Flankenwechsel zum Signalisieren der Freigabe der Nockenwellenregelung ausgeht, wird bei 90 ein Impuls erzeugt, so daß bei 92 ein Reset durchgeführt wird. Hierbei wird dem Integrator 52 und dem Filter 56 ein in der Speicherstelle 94 enthaltener Initialisierungswert eingeschrieben. Dieser Initialisierungswert 94 stammt aus einem Kennfeld bzw. einer Kennlinie 96 für die Motortemperatur.

Zum Sperren des Integrators 52 und des Filters 56 in bestimmten Betriebsphasen dient der Block 98. Wenn in Speicherstelle 100 signalisiert wird, daß ein Maß für die Regelabweichung 50 größer als ein vorbestimmter Wert ist, liefert ein UND-Gatter 102 ein Signal, welches Integrator 52 und das Filter 56 sperrt, bzw. stoppt. Mit anderen Worten erfolgt die Berechnung des I-Anteils 54 nur in solchen Betriebsphasen, in denen die Regelabweichung 50 klein ist. Auf diese Weise wird zusätzlich der I-Anteil in vorteilhafter Weise gesperrt. In bestimmten Betriebsphasen der Brennkraftmaschine ist es vorteilhaft, die Verstellung und damit die Regelung abzuschalten. Dies erfolgt über die Speicherstelle 103.

Es kann nun theoretisch vorkommen, daß der P-Anteil 50 und der I-Anteil 54 zusammen wegen der Begrenzung des I-Anteils 54 nicht ausreichen, um den Istwert von einer großen Regelabweichung zum Sollwert zu ziehen. Dies ist beispielsweise dann der Fall, wenn die Kennlinie 96 ungeeignete Initialisierungswerte vorgibt. Für diesen Fall ist Block 105 vorgesehen. Ein Timer 104 gibt nach einer vorbestimmten Zeitspanne, beispielsweise 3s, über das ODER-Gatter 106 den Integrator 52 und das Filter 56 trotz großer Regelabweichung wieder frei, wenn nach dieser Zeitspanne der Sollwert noch nicht erreicht wurde.

Ein weiterer Block 108 dient zum absoluten Begrenzen des gemittelten 1-Anteils 60. Sofern dieser aus einer vorbestimmten Bandbreite 110 heraus läuft, kann von einer Fehlfunktion des Verstellers 24 ausgegangen werden. Beispielsweise blockiert trotz ausreichendem Öldrucks ein verklemmter Span die Drehung des Verstellers 24. Block 108 verhindert in dieser Situation ein unkontrolliertes Anwachsen des Mittelwertes 60 und somit des I-Anteils 54.

## Patentansprüche

1. Verfahren zum Regeln einer Regelstrecke, wobei aus einem Sollwert und einem Istwert eine Regelabweichung und aus der Regelabweichung ein P-Anteil sowie mittels eines Integrators ein I-Anteil bestimmt wird und aus dem P-Anteil sowie dem I-Anteil eine Stellgröße für die Regelstrecke bestimmt wird,
wobei der I-Anteil als Ausgangswert des Integrators auf einen Maximalwert und einen Minimalwert begrenzt wird, **dadurch gekennzeichnet,**
**daß** der I-Anteil mittels eines Filters mit vorbestimmter Zeitkonstante über die Zeit gemittelt wird und der Maximalwert für den Integrator aus diesem Mittelwert zuzüglich einem vorbestimmten ersten Wert und der Minimalwert aus diesem Mittelwert abzüglich einem vorbestimmten zweiten Wert bestimmt wird und
**daß** in einem Zustand, in dem die Regelstrecke nicht regelbar ist, die Zeitkonstante des Filters auf einen höheren Wert gesetzt wird.

2. Verfahren nach Anspruch 1, **dadurch gekennzeichnet, daß** die Regelstrecke einen Nockenwellenversteller einer Brennkraftmaschine umfaßt und die Stellgröße ein Tastverhältnis zum Bestromen eines Proportionalventiles ist, welches den Nockenwellenversteller ansteuert.

3. Verfahren nach Anspruch 1 oder 2, **dadurch gekennzeichnet, daß** der I-Anteil nur dann bestimmt wird, wenn die Regelabweichung unterhalb eines vorbestimmten Wertes liegt.

4. Verfahren nach wenigstens einem der vorhergehenden Ansprüche, **dadurch gekennzeichnet, daß** als Filter ein PT1-Filter verwendet wird.

5. Regler zum Regeln einer Regelstrecke, welcher aus einem Sollwert und einem Istwert eine Regelabweichung bestimmt und einen Integrator (52) aufweist, welcher aus der Regelabweichung einen I-Anteil (54) bestimmt, aus dem der Regler zumindest zusammen mit einem P-Anteil eine Stellgröße für die Regelstrecke bestimmt, wobei dem Integrator (52) ein Begrenzer (62) zugeordnet ist, welcher den Ausgangswert (54) des Integrators (52) auf einen Maximalwert (64) und einen Minimalwert (66) begrenzt, **dadurch gekennzeichnet, daß** dem Integrator (52) ein Filter (56) nachgeschaltet ist, welches mit einer vorbestimmten Zeitkonstante (58) den Ausgang (54) des Integrators (52) mittelt, wobei der Ausgang (60) des Filters (56) mit dem Begrenzer (62) verbunden ist, welcher den Maximalwert (64) für den Integrator (52) aus dem Ausgang (60) des Filters (56) zuzüglich eines vorbestimmten ersten Wertes und den Minimalwert (66) aus dem Ausgangswert (60) des Filters (52) abzüglich eines vorbestimmten zweiten Wertes bestimmt, wobei ferner dem Filter (56) eine Umschalteinrichtung (68) zugeordnet ist, welche in einem Zustand, in dem die Regelstrecke nicht regelbar ist, die Zeitkonstante (58) des Filters (56) erhöht.

6. Regler nach Anspruch 5, **dadurch gekennzeichnet, daß** die Regelstrecke einen Nockenwellenversteller (24) einer Brennkraftmaschine umfaßt und die Stellgröße ein Tastverhältnis zum Bestromen eines Proportionalventiles (36) ist, welches den Nockenwellenversteller (24) ansteuert.

7. Regler nach Anspruch 5 oder 6, **dadurch gekennzeichnet, daß** dem Integrator (52) und dem Filter (56) eine Sperreinrichtung (98) zugeordnet ist, welche den Integrator (52) und die Filterung durch den Filter (56) sperrt, wenn die Regelabweichung oberhalb eines vorbestimmten Wertes liegt.

8. Regler nach einem der Ansprüche 5 bis 7, **dadurch gekennzeichnet, daß** das Filter ein PT1-Filter ist.

9. Brennkraftmaschine mit wenigstens einer von einer Kurbelwelle (28) angetriebenen Nockenwelle (18), einem Nockenwellenversteller (24), welcher die Nockenwelle (18) bzgl. der Kurbelwelle (28) um einen vorbestimmten Winkel verschwenkt, und einem Regler, dessen Ausgang eine Stellgröße in Form eines Tastverhältnisses zum Bestromen eines Proportionalventiles (24) ist, welches den Nockenwellenversteller (24) ansteuert und verstellt, **dadurch gekennzeichnet, daß** der Regler gemäß wenigstens einem der Ansprüche 5 bis 8 ausgebildet ist.

## Claims

1. Method for controlling a controlled system, a control error being determined from a setpoint value and an actual value, and a P component being determined from the control error and an I component being determined by means of an integrator, and a manipulated variable for the controlled system being determined from the P component and from the I component, the I component being limited as an output value of the integrator to a maximum value and a minimum value, **characterized in that** the I component is averaged over time by means of a filter with a predetermined time constant, and the maximum value for the integrator is determined from this mean value plus a predetermined first value, and the minimum value is determined from this mean value minus a predetermined second value, and **in that**, in a state in which the controlled system cannot be controlled, the time constant of the filter is set to a higher value.

2. Method according to Claim 1, **characterized in that** the controlled system comprises a camshaft adjuster of an internal combustion engine and the manipulated variable is a pulse duty factor for energizing a proportional valve which actuates the camshaft adjuster.

3. Method according to Claims 1 or 2, **characterized in that** the I component is determined only if the control error is below a predetermined value.

4. Method according to at least one of the preceding claims, **characterized in that** a PT1 filter is used as the filter.

5. Controller for controlling a controlled system, which controller determines a control error from a setpoint value and an actual value and has an integrator (52) which determines, from the control error, an I component (54) from which the controller determines, at least together with a P component, a manipulated variable, for the controlled system, a limiter (62) being assigned to the integrator (52), said limiter limiting the output value (54) of the integrator (52) to a maximum value (64) and a minimum value (66), **characterized in that** a filter (56), which averages the output (54) of the integrator (52) with a predetermined time constant (58) is arranged downstream of the integrator (52), the output (60) of the filter (56) being connected to the limiter (62) which determines the maximum value (64) for the integrator (52) from the output (60) of the filter (56) plus a predetermined first value, and the minimum value (66) from the output value (60) of the filter (52) minus a predetermined second value, a switching device (68) which, in a state in which the controlled system cannot be controlled, increases the time constant (58) of the filter (56), also being assigned to the filter (56).

6. Controller according to Claim 5, **characterized in that** the controlled system comprises a camshaft adjuster (24) of an internal combustion engine, and the manipulated variable is a pulse duty factor for energising a proportional valve (36) which actuates the camshaft adjuster (24).

7. Controller according to Claim 5 or 6, **characterized in that** a blocking device (98) which blocks the integrator (52) and the filtering by the filter (56) if the control error is above a predetermined value is assigned to the integrator (52) and the filter (56).

8. Controller according to one of Claims 5 to 7, **characterized in that** the filter is a PT1 filter.

9. Internal combustion engine having at least one camshaft (18) which is driven by a crankshaft (28), a camshaft adjuster (24) which pivots the camshaft (18) with respect to the crankshaft (28) through a predetermined angle, and a controller whose output is a manipulated variable in the form of a pulse duty factor for energizing a proportional valve (24) which actuates and adjusts the camshaft adjuster (24), **characterized in that** the controller is embodied according to at least one of Claims 5 to 8.

## Revendications

1. Procédé pour réguler un système asservi, un écart de régulation étant déterminé à partir d'une valeur de consigne et d'une valeur réelle et une part P à partir de l'écart de régulation ainsi qu'une part I au moyen d'un intégrateur et une grandeur de commande pour le système asservi étant déterminée à partir de la part P et de la part I, la part I en tant que valeur de sortie de l'intégrateur étant limitée à une valeur maximale et à une valeur minimale, **caractérisé en ce que** la part I est moyennisée dans le temps au moyen d'un filtre ayant une constante de temps prédéfinie et la valeur maximale pour l'intégrateur est déterminée à partir de cette valeur moyenne plus une première valeur prédéfinie et la valeur minimale à partir de cette valeur moyenne moins une deuxième valeur prédéfinie et **en ce que** dans un état où le système asservi ne peut pas être régulé, la constante de temps du filtre est fixée à une valeur plus élevée.

2. Procédé selon la revendication 1, **caractérisé en ce que** le système asservi comprend un dispositif de positionnement d'arbre à cames d'un moteur à combustion interne et la grandeur de commande est un rapport cyclique pour l'alimentation électrique d'une vanne proportionnelle qui commande le dispositif de positionnement d'arbre à cames.

3. Procédé selon la revendication 1 ou 2, **caractérisé en ce que** la part I n'est déterminée que lorsque l'écart de régulation est inférieur à une valeur prédéfinie.

4. Procédé selon au moins l'une des revendications précédentes, **caractérisé en ce que** le filtre utilisé est un filtre PT1.

5. Régulateur pour réguler un système asservi, lequel détermine un écart de régulation à partir d'une valeur de consigne et d'une valeur réelle et présente un intégrateur (52) qui, à partir de l'écart de régulation, détermine une part I (54) à partir de laquelle le régulateur, au moins conjointement à une part P, détermine une grandeur de commande pour le système asservi, un limiteur (62) étant associé à l'intégrateur (52), lequel limite la valeur de sortie (54) de l'intégrateur (52) à une valeur maximale (64) et à une valeur minimale (66), **caractérisé en ce qu'**un filtre (56) est branché à la suite de l'intégrateur (52), lequel calcule la moyenne de la sortie (54) de l'intégrateur (52) avec une constante de temps (58) prédéfinie, la sortie (60) du filtre (56) étant reliée au limiteur (62) qui détermine la valeur maximale (64) pour l'intégrateur (52) à partir de la sortie (60) du filtre (56) plus une première valeur prédéfinie et la valeur minimale (66) à partir de la valeur de sortie (60) du filtre (52) moins une deuxième valeur prédéfinie, un dispositif d'inversion (68) étant en plus associé au filtre (56), lequel augmente la constante de temps (58) du filtre (56) dans un état où le système asservi ne peut pas être régulé.

6. Régulateur selon la revendication 5, **caractérisé en ce que** le système asservi comprend un dispositif de positionnement d'arbre à cames (24) d'un moteur à combustion interne et la grandeur de commande est un rapport cyclique pour l'alimentation électrique d'une vanne proportionnelle (36) qui commande le dispositif de positionnement d'arbre à cames (24).

7. Régulateur selon la revendication 5 ou 6, **caractérisé en ce qu'**à l'intégrateur (52) et au filtre (56) est associé un dispositif de blocage (98) qui bloque l'intégrateur (52) et le filtrage par le filtre (56) lorsque l'écart de régulation est supérieur à une valeur prédéfinie.

8. Régulateur selon l'une des revendications 5 à 7, **caractérisé en ce que** le filtre est un filtre PT1.

9. Moteur à combustion interne comprenant au moins un arbre à cames (18) entraîné par un vilebrequin (28), un dispositif de positionnement d'arbre à cames (24) qui pivote l'arbre à cames (18) ou le vilebrequin (28) selon un angle prédéfini et un régulateur dont la sortie est une grandeur de commande sous la forme d'un rapport cyclique pour l'alimentation électrique d'une vanne proportionnelle (24) qui commande et positionne le dispositif de positionnement d'arbre à cames (24), **caractérisé en ce que** le régulateur est réalisé conformément à au moins l'une des revendications 5 à 8.
